# EUROPEAN PATENT APPLICATION

(11) **EP 4 749 999 A1**
(43) Date of publication of application: **27.05.2026**
(21) Application number: 24842294.1
(22) Date of filing: 12.07.2024
(51) Int. Cl.: H04L 9/40

(54) **SECURITY AUTHENTICATION**

(30) Priority: 17.07.2023 CN 202310879903
(71) Applicant: Alipay (Hangzhou) Digital Service Technology Co., Ltd., Hangzhou, Zhejiang 310000 (CN)
(72) Inventor: WANG, Kun, Hangzhou, Zhejiang 310000 (CN); DAI, Zongyu, Hangzhou, Zhejiang 310000 (CN); JIANG, Tangmeizi, Hangzhou, Zhejiang 310000 (CN); LIN, Youfa, Hangzhou, Zhejiang 310000 (CN); HAN, Shuting, Hangzhou, Zhejiang 310000 (CN); QIAN, Zhangyang, Hangzhou, Zhejiang 310000 (CN); WANG, Fan, Hangzhou, Zhejiang 310000 (CN); WANG, Haiyan, Hangzhou, Zhejiang 310000 (CN); WU, Chao, Hangzhou, Zhejiang 310000 (CN); ZHANG, Xuan, Hangzhou, Zhejiang 310000 (CN)
(74) Representative: Winter, Brandl - Partnerschaft mbB
(86) International application number: PCT/CN2024/105128
(87) International publication number: WO 2025/016301

(57) **Abstract**

This application relates to the field of information security technologies, and specifically provides a security authentication method and apparatus, an electronic device, and a storage medium. The security authentication method includes: when determining that a security authentication request sent by user equipment for a target service is received, acquiring target device information and target service information in the security authentication request; performing device authentication based on the target device information to obtain a device authentication result; performing service authentication based on a service binding relationship among a service, the user equipment, and a user account, the target device information, and the target service information, to obtain a service authentication result; determining a security authentication result based on the device authentication result and the service authentication result; and returning the security authentication result to the user equipment. In this way, authentication security is improved.

## Description

### TECHNICAL FIELD

This application relates to the field of information security technologies, and specifically, to a security authentication method and apparatus, an electronic device, and a storage medium.

### BACKGROUND

With development of internet technologies, people have an increasingly high requirement for network information security.

In a conventional technology, security authentication is mainly performed by performing identity verification on a user. Specifically, the security authentication is usually performed based on account information, biological feature information, or the like of the user.

However, in this manner, in some scenarios in which a particular service (for example, payment or confidential information viewing) needs to be provided by using a particular device (for example, a device with a high security level or a device in a specified area), it is difficult to satisfy authentication security.

### SUMMARY

An objective of embodiments of this application is to provide a security authentication method and apparatus, an electronic device, and a storage medium, to improve authentication security when security authentication is performed.

According to one aspect, an implementation of this application provides a security authentication method. The method includes: when determining that a security authentication request sent by user equipment for a target service is received, acquiring target device information and target service information in the security authentication request; performing device authentication based on the target device information to obtain a device authentication result; performing service authentication based on a service binding relationship among a service, the user equipment, and a user account, the target device information, and the target service information, to obtain a service authentication result; determining a security authentication result based on the device authentication result and the service authentication result; and returning the security authentication result to the user equipment.

In an implementation, the performing device authentication based on the target device information to obtain a device authentication result includes: acquiring a device authentication status corresponding to the target device information; and determining that the device authentication succeeds if the device authentication status indicates an authentication success; or determining that the device authentication fails if the device authentication status indicates an authentication failure.

In an implementation, before the acquiring a device authentication status corresponding to the target device information, the method further includes: when determining that an online state sent by the user equipment is received, returning a challenge code to the user equipment; when receiving device signature information of the user equipment, performing signature verification on the device signature information, where the device signature information is obtained by signing the target device information and the challenge code; and setting the device authentication status to an authentication success if it is determined that the signature verification succeeds, the challenge code is the same as a local challenge code, and a device registration information set includes the target device information; or setting the device authentication status to an authentication failure if any of the three conditions are not satisfied.

In an implementation, the performing service authentication based on a service binding relationship among a service, the user equipment, and a user account, the target device information, and the target service information, to obtain a service authentication result includes: when the security authentication request does not include user account information, determining that the service authentication succeeds if user account information corresponding to the target device information and the target service information is successfully obtained based on the service binding relationship; or determining that the service authentication fails if the user account information corresponding to the target device information and the target service information fails to be obtained based on the service binding relationship; obtaining user account information corresponding to the target device information and the target service information based on the service binding relationship; and determining that the service authentication succeeds if the user account information corresponding to the target device information and the target service information matches user account information further included in the security authentication request, or determining that the service authentication fails if the user account information corresponding to the target device information and the target service information does not match the user account information further included in the security authentication request.

In an implementation, before the performing service authentication based on a service binding relationship among a service, the user equipment, and a user account, the target device information, and the target service information, to obtain a service authentication result, the method further includes: when determining that a user binding request is received, acquiring a user binding signature in the user binding request; performing signature verification on the user binding signature; acquiring user account information and target device information in the user binding signature if it is determined that the signature verification succeeds; performing device authentication based on the target device information to obtain a device authentication result; and establishing a service binding relationship between the user account information and the target device information if the device authentication result indicates an authentication success.

In an implementation, the determining a security authentication result based on the device authentication result and the service authentication result includes: determining that security authentication succeeds if the device authentication result indicates an authentication success, and the service authentication result indicates an authentication success; or determining that the security authentication fails if any of the two conditions are not satisfied.

In an implementation, before the acquiring target device information and target service information in the security authentication request, the method further includes: performing signature verification on the security authentication request. In addition, the determining a security authentication result based on the device authentication result and the service authentication result includes: determining the device authentication result indicates an authentication success if it is determined that the signature verification on the security authentication request succeeds, and the service authentication result indicates an authentication success, that security authentication succeeds; or determining that the security authentication fails if any of the three conditions are not satisfied.

According to one aspect, an implementation of this application provides a security authentication method. The method includes: sending a security authentication request for a target service to a security server, where the security authentication request includes target device information and target service information; and receiving a security authentication result returned by the security server, where the security authentication result is returned based on a device authentication result and a service authentication result, the device authentication result is obtained by performing device authentication based on the target device information, and the service authentication result is obtained by performing service authentication based on a service binding relationship among a service, user equipment, and a user account, the target device information, and the target service information.

In an implementation, before the receiving a security authentication result returned by the security server, the method further includes: when determining that a device authentication condition is satisfied, sending an online state to the security server; when determining that a challenge code that is returned by the security server based on the online state is received, signing the target device information and the challenge code to obtain device signature information; sending the device signature information to the security server; and receiving a device authentication result that is returned by the security server based on the device signature information.

According to one aspect, an implementation of this application provides a security authentication apparatus. The apparatus includes an acquiring unit, configured to: when determining that a security authentication request sent by user equipment for a target service is received, acquire target device information and target service information in the security authentication request; an authentication unit, configured to perform device authentication based on the target device information to obtain a device authentication result; an obtaining unit, configured to perform service authentication based on a service binding relationship among a service, the user equipment, and a user account, the target device information, and the target service information, to obtain a service authentication result; a determining unit, configured to determine a security authentication result based on the device authentication result and the service authentication result; and a returning unit, configured to return the security authentication result to the user equipment.

In an implementation, the authentication unit is further configured to: acquire a device authentication status corresponding to the target device information; and determine that the device authentication succeeds if the device authentication status indicates an authentication success; or determine that the device authentication fails if the device authentication status indicates an authentication failure.

In an implementation, the authentication unit is further configured to: when determining that an online state sent by the user equipment is received, return a challenge code to the user equipment; when receiving device signature information of the user equipment, perform signature verification on the device signature information, where the device signature information is obtained by signing the target device information and the challenge code; and set the device authentication status to an authentication success if it is determined that the signature verification succeeds, the challenge code is the same as a local challenge code, and a device registration information set includes the target device information; or set the device authentication status to an authentication failure if any of the three conditions are not satisfied.

In an implementation, the obtaining unit is configured to: when the security authentication request does not include user account information, determine that the service authentication succeeds if user account information corresponding to the target device information and the target service information is successfully obtained based on the service binding relationship; or determine that the service authentication fails if the user account information corresponding to the target device information and the target service information fails to be obtained based on the service binding relationship; or is configured to: obtain user account information corresponding to the target device information and the target service information based on the service binding relationship; and determine that the service authentication succeeds if the user account information corresponding to the target device information and the target service information matches user account information further included in the security authentication request; or determine that the service authentication fails if the user account information corresponding to the target device information and the target service information does not match the user account information further included in the security authentication request.

In an implementation, the obtaining unit is further configured to: when determining that a user binding request is received, acquire a user binding signature in the user binding request; perform signature verification on the user binding signature; acquire user account information and target device information in the user binding signature if it is determined that the signature verification succeeds; perform device authentication based on the target device information to obtain a device authentication result; and establish a service binding relationship between the user account information and the target device information if the device authentication result indicates an authentication success.

In an implementation, the determining unit is configured to: determine that security authentication succeeds if the device authentication result indicates an authentication success, and the service authentication result indicates an authentication success; or determine that security authentication fails if any of the two conditions are not satisfied.

In an implementation, the acquiring unit is further configured to perform signature verification on the security authentication request. The determining unit is configured to: determine that the security authentication succeeds if it is determined that the signature verification on the security authentication request succeeds, the device authentication result indicates an authentication success, and the service authentication result indicates an authentication success; or determine that the security authentication fails if any of the three conditions are not satisfied.

According to one aspect, an implementation of this application provides a security authentication apparatus. The apparatus includes: a sending unit, configured to send a security authentication request for a target service to a security server, where the security authentication request includes target device information and target service information; and a receiving unit, configured to receive a security authentication result returned by the security server, where the security authentication result is returned based on a device authentication result and a service authentication result, the device authentication result is obtained by performing device authentication based on the target device information, and the service authentication result is obtained by performing service authentication based on a service binding relationship among a service, user equipment, and a user account, the target device information, and the target service information.

In an implementation, the sending unit is further configured to: when determining that a device authentication condition is satisfied, send an online state to the security server; when determining that a challenge code that is returned by the security server based on the online state is received, sign the target device information and the challenge code to obtain device signature information; send the device signature information to the security server; and receive a device authentication result that is returned by the security server based on the device signature information.

According to one aspect, an implementation of this application provides an electronic device. The electronic device includes a processor and a memory, storing computer instructions. The computer instructions are for causing the processor to perform the steps of the method provided in any one of the foregoing various optional implementations of security authentication.

According to one aspect, an implementation of this application provides a storage medium, storing computer instructions. The computer instructions are for causing a computer to perform the steps of the method provided in any one of the foregoing optional implementations of security authentication.

According to a security authentication method and apparatus, an electronic device, and a storage medium provided in embodiments of this application, when it is determined that a security authentication request sent by user equipment for a target service is received, target device information and target service information in the security authentication request are acquired; device authentication is performed based on the target device information to obtain a device authentication result; service authentication is performed based on a service binding relationship among a service, the user equipment, and a user account, the target device information, and the target service information, to obtain a service authentication result; a security authentication result is determined based on the device authentication result and the service authentication result; and the security authentication result is returned to the user equipment. In this way, the device authentication is first performed based on the target device information, and then the service authentication is performed based on the target device information and the target service information. Restrictions of different services for a device and a user are comprehensively considered, to improve performance of security authentication, and satisfy a security requirement of the user.

### BRIEF DESCRIPTION OF THE DRAWINGS

To describe the technical solutions in specific implementations of this application or in conventional technologies more clearly, the following briefly describes the accompanying drawings required for describing specific implementations or conventional technologies. Apparently, the accompanying drawings in the following descriptions show some implementations of this application, and a person of ordinary skill in the art may still obtain other accompanying drawings based on these accompanying drawings without creative efforts.
FIG. 1 is an interaction flowchart of a device initialization method according to some implementations of this application;
FIG. 2 is a flowchart of implementation of a device registration method according to some implementations of this application;
FIG. 3 is a flowchart of implementation of a device authentication method according to some implementations of this application;
FIG. 4 is a flowchart of implementation of a service binding method according to some implementations of this application;
FIG. 5 is a flowchart of a security authentication method according to some implementations of this application;
FIG. 6 is a structural block diagram of a security authentication apparatus according to some implementations of this application;
FIG. 7 is a structural block diagram of another security authentication apparatus according to some implementations of this application; and
FIG. 8 is a schematic structural diagram of an electronic device according to some implementations of this application.

### DETAILED DESCRIPTION

The technical solutions of this application are clearly and completely described below with reference to the accompanying drawings. It is clear that, the described implementations are merely some rather than all of implementations of this application. All other implementations obtained by a person of ordinary skill in the art based on the implementations of this application without creative efforts shall fall within the protection scope of this application. In addition, technical features involved in different implementations of this application described below may be combined with each other provided that no conflict occurs.

First, some terms related to embodiments of this application are described, to facilitate understanding by a person skilled in the art.

A terminal device may be a mobile terminal, a fixed terminal, or a portable terminal, for example, a mobile phone, a station, a unit, a device, a multimedia computer, a multimedia tablet, an internet node, a communicator, a desktop computer, a laptop computer, a notebook computer, a netbook computer, a tablet computer, a personal communication system device, a personal navigation device, a personal digital assistant, an audio/video player, a digital camera/video camera, a positioning device, a television receiver, a radio broadcast receiver, an ebook device, a game device, or any combination thereof, including accessories and peripherals of these devices, or any combination thereof. It may be further predicted that the terminal device supports any type of interface (for example, a wearable device) for a user, and the like.

A server may be an independent physical server, or may be a server cluster or a distributed system including a plurality of physical servers, or may be a cloud server that provides basic cloud computing services such as a cloud service, a cloud database, cloud computing, a cloud function, cloud storage, a network service, cloud communication, a middleware service, a domain name service, a security service, big data, and an artificial intelligence platform.

With development of internet technologies, people have an increasingly high requirement for network information security. In a conventional technology, when a user requests a service, security authentication is usually performed based on account information, biological feature information, and the like of the user.

However, in this manner, in some scenarios, there are still some security risks. For example, in an actual extended reality (XR) service scenario, because an XR device is expensive, merchants usually operate in a leasing manner.

When a user requests a service on an XR client in the XR device, to ensure service security, security authentication is usually performed on a service request by using biological feature information or account information of the user. However, in this manner, only identity verification on the user is considered, and service restrictions of different services on a used device and the user are not considered, so that security requirements of the user cannot be ensured.

Based on defects in the related technology, implementations of this application provide a security authentication method and apparatus, an electronic device, and a storage medium, to improve security authentication performance when security authentication is performed. An implementation of this application provides a security authentication method. The method may be applied to an electronic device. A type of the electronic device is not limited in this application, and the electronic device may be any device type suitable for implementation, for example, a smartphone or a tablet computer. Details are not described in this application.

The following describes an example of an application scenario according to an embodiment of this application.

In an application scenario, before performing a service request operation of a user, user equipment first performs security authentication by using a security server, to improve information security. Specifically, in response to a download request of the user for a file download (that is, a target service), the user equipment sends a security authentication request including file download information and a device serial number (that is, target service information and target device information) to the security server. The security server performs security authentication based on the security authentication request to obtain a security authentication result. The user equipment receives the security authentication result returned by the security server. If determining that the security authentication succeeds, the user equipment responds to the download request and performs a file download operation, so that the user can obtain a file that needs to be downloaded.

In an application scenario, user equipment is a service server. When receiving a service request sent by a terminal device, the user equipment first performs security authentication by using a security server, and returns, after the security authentication succeeds, a requested service to the terminal device. Specifically, in response to a download operation of the user for a file download (that is, a target service), the terminal device sends a file download request to the user equipment. The user equipment sends, based on the file download request, a security authentication request including file download information and a device serial number (that is, target service information and target device information) to the security server. The security server performs security authentication based on the security authentication request to obtain a security authentication result, and returns the security authentication result to the user equipment. If determining that the security authentication succeeds, the user equipment responds to the file download request of the terminal device, and the terminal device performs a file download operation based on a file download response message returned by the user equipment, so that the user can obtain a file that needs to be downloaded.

In an application scenario, user equipment sends a service request to a security server. After receiving the service request, the security server delivers a security authentication instruction (that is, a security authentication request) to a security authentication module on the security server. The security authentication module performs security authentication based on the security authentication request to obtain a security authentication result, and returns the security authentication result to a service module on the security server. If determining that the security authentication succeeds, the service module returns a service response message to the user equipment; or if determining that the security authentication fails, the service module returns a response failure message.

In this embodiment of this application, before security authentication is performed, the user equipment first undergoes registration, device authentication, and service binding. Optionally, the user equipment may be a terminal device, or may be a server configured to provide a service.

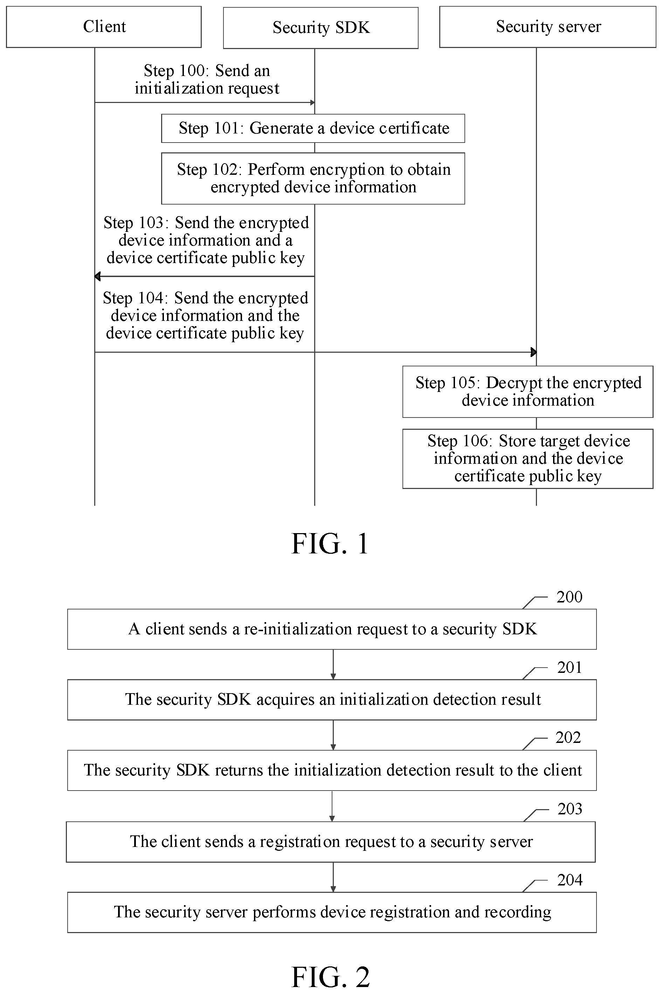

FIG. 1 is an interaction flowchart of a device initialization method. FIG. 1 includes a client, a security software development kit (SDK), and a security server. The client and the security SDK are located in same user equipment. The following describes the device initialization method with reference to FIG. 1. A specific implementation procedure of the method is as follows.

Step 100: The client sends an initialization request of target device information to the security SDK.

In an implementation, after determining that production line assembly is completed, and power-on and initialization are performed, the client sends the initialization request to the security SDK.

The initialization request includes the target device information. Optionally, the target device information may include a product serial number (SN) of the user equipment, and may further include a central processing unit number (CPU Num). In actual application, the target device information may be set based on an actual application scenario. This is not limited herein.

Step 101: The security SDK generates a device certificate.

In an implementation, the security SDK acquires the target device information in the initialization request, and generates the device certificate based on the target device information and according to a preset rule.

A device certificate private key and a device certificate public key may be obtained and stored by using the device certificate. Optionally, the device certificate private key and the device certificate public key may be symmetric encryption keys, or may be asymmetric encryption keys.

Optionally, the user equipment may further generate a TID according to the preset rule, and add the TID into the target device information.

Step 102: The security SDK encrypts the target device information to obtain the encrypted device information.

In an implementation, the security SDK encrypts the target device information by using the device certificate private key to obtain the encrypted device information.

Step 103: The security SDK returns the encrypted device information and the device certificate public key to the user equipment.

Step 104: The user equipment sends the encrypted device information and the device certificate public key to the security server.

Step 105: The security server decrypts the encrypted device information based on the device certificate public key to obtain the target device information.

Step 106: The security server stores the target device information and the device certificate public key.

Further, the security server returns an initialization result to the client. The security server sends the initialization result to the client.

In this way, initialization of the user equipment may be performed first.

After device initialization, registration of the user equipment may be performed. FIG. 2 is a flowchart of implementation of a device registration method. The following describes the device registration method with reference to FIG. 2. A specific implementation procedure of the method is as follows.

Step 200: The client sends a re-initialization request to the security SDK.

Step 201: The security SDK acquires an initialization detection result.

In an implementation, the security SDK acquires target device information included in the re-initialization request, and acquires an initialization status corresponding to the target device information. If it is determined that the initialization status is that the initialization has been completed, the initialization detection result indicating that the initialization is completed is returned to the client; or if it is determined that the initialization status is that the initialization has not been completed, the foregoing device initialization procedure, to be specific, step 100 to step 106, is performed.

Step 202: The security SDK returns the initialization detection result to the client.

Step 203: The client sends a registration request to the security server.

In an implementation, if determining, based on the initialization detection result, that the initialization is completed, the client sends the registration request to the security server. The registration request may include the target device information.

Step 204: The security server performs device registration and recording.

In an implementation, the security server performs registration and recording on the target device information to implement registration of the user equipment.

In an implementation, the security server acquires the target device information based on the device registration request, and determines, based on the target device information and an initialization record, whether the user equipment is initialized. If the user equipment is initialized, the security server performs registration and recording on the target device information. Optionally, the device registration may be performed in an antchain-based on-chain manner. Further, the target device information may be added to a device registration information set.

In this way, the registration of the user equipment may be performed by using the security server.

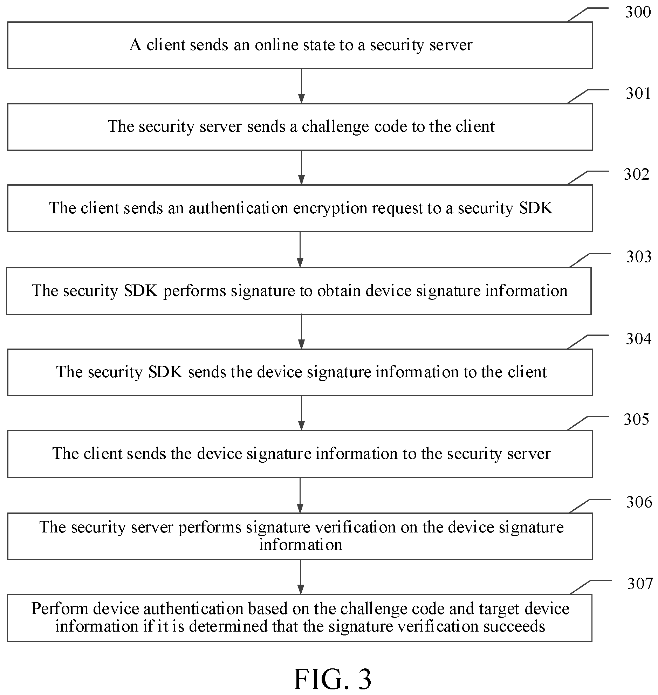

After the device registration is completed, trusted authentication may be performed on online user equipment. FIG. 3 is a flowchart of implementation of a device authentication method. The following describes the device authentication method with reference to FIG. 3. A specific implementation procedure of the method is as follows.

Step 300: The client sends an online state to the security server.

In an implementation, when determining that a device authentication condition is satisfied, the client sends the online state to the security server.

Optionally, the device authentication condition may be that the device is activated, or that set authentication time is reached, or that an authentication instruction of a user is received. In actual application, the device authentication condition may be set based on an actual application scenario. This is not limited herein.

Step 301: The security server sends a challenge code to the client.

In an implementation, when determining that the online state sent by the user equipment is received, the security server sends the challenge code to the client.

The challenge code is also referred to as a challenge password, which refers to a group of encrypted passwords generated by following a handshake verification protocol, and is for ensuring that a real password of the user is not leaked during a transmission process, to improve data security.

Step 302: The client sends an authentication encryption request to the security SDK.

The authentication encryption request may include the challenge code and target device information.

Step 303: The security SDK performs signature to obtain device signature information.

In an implementation, the security SDK signs the challenge code and the target device information by using the device certificate private key to obtain the device signature information.

Step 304: The security SDK sends the device signature information to the client.

Step 305: The client sends the device signature information to the security server.

In an implementation, the client sends the device signature information to the security server.

Step 306: The security server performs signature verification on the device signature information.

Step 307: Perform device authentication based on the challenge code and the target device information if it is determined that the signature verification succeeds.

Specifically, the device authentication status is set to an authentication success, if it is determined that the signature verification succeeds, the challenge code is the same as a local challenge code, and the device registration information set includes the target device information; or the device authentication status is set to an authentication failure if any of the three conditions are not satisfied.

In an implementation, the security server performs the signature verification on the device signature information based on the device certificate public key, acquires the target device information and the challenge code in the device signature information if the verification succeeds, and determines that the device authentication succeeds if the challenge code is the same as the local challenge code, and the device registration information set includes the target device information.

Further, a device authentication result is sent to the client. If the client determines that the authentication fails, a device authentication procedure, to be specific, step 300 to step 306, is repeatedly performed until the client determines that the device authentication succeeds.

In this way, the device authentication may be performed on the user equipment in advance by using the security server.

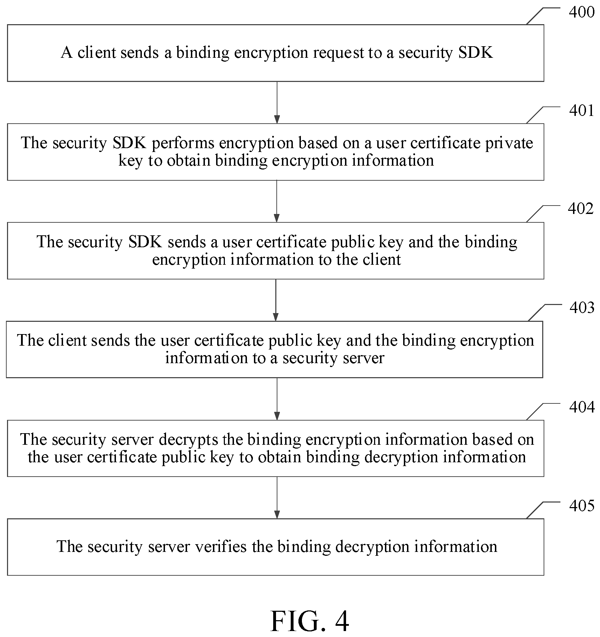

In an implementation, after the device authentication is completed, service binding may be performed, to be specific, an association relationship among a service, the user equipment, and a user account is established. FIG. 4 is a flowchart of implementation of a service binding method. The following describes the service binding method with reference to FIG. 4. A specific implementation procedure of the method is as follows.

Step 400: The client sends a binding encryption request to the security SDK.

In an implementation, the client may guide a user to perform service binding, and invoke, in response to a service binding operation of the user, a service binding interface to send the binding encryption request to the security SDK.

The binding encryption request may include target service information, user account information, and target device information.

Further, before the binding encryption request is sent, to improve security, the client may further guide the user to enter an operation password, perform password verification in response to a password enter operation of the user, and send the binding encryption request to the security SDK if the verification succeeds.

Further, before step 400 is performed, the operation password may alternatively be preset. In an implementation, the client may preset the operation password by using the following steps.

In response to a security center login operation of a user, a security center is accessed. In response to a password setting operation of the user, the operation password entered by the user is acquired. It is determined whether device binding with a terminal device of the user is completed. If it is determined that device binding is not completed, a terminal device binding operation is performed. If it is determined that device binding is completed, in response to the verification enter operation of the user, a verification code (for example, a mobile phone verification code) entered by the user is obtained. If it is determined that verification on the verification code succeeds, it is determined that password setting succeeds; or if it is determined that the verification on the verification code fails, it is determined that password setting fails. The verification code is acquired by the user by using the terminal device.

Further, if the user forgets the operation password, the operation password may also be reset. In an implementation, the following steps may further be used to reset the operation password.

In response to a security center login operation of the user, the security center is accessed. In response to a password reset operation of the user, a new operation password entered by the user is acquired. In response to a verification enter operation of the user, a verification code (for example, a mobile phone verification code) entered by the user is obtained. If it is determined that verification on the verification code succeeds, it is determined that password setting succeeds; or if it is determined that the verification on the verification code fails, it is determined that password setting fails. Further, if it is determined that the terminal device cannot be used, the verification code may alternatively be acquired via email.

Further, to improve account security, at least one of the following manners may further be used.

Manner 1: Perform a terminal device binding replacement procedure based on an operation of the user, to replace a terminal device bound to the user.

Manner 2: Identify whether an account is logged in at a different location, to detect whether a login device is an unbound terminal device or uses an abnormal IP.

Manner 3: Verify an operation password in a screen locking manner.

Manner 4: During user registration, in the client, perform service authenticction on the user by using biological features such as an iris and a palm print of the user.

Step 401: The security SDK performs encryption based on a user certificate private key to obtain binding encryption information.

In an implementation, the security SDK generates a user certificate, and encrypts target service information, the target device information, and the user account information by using the user certificate private key.

A user certificate public key and the user certificate private key that are used for encryption and decryption may be obtained by using the user certificate.

Step 402: The security SDK sends the user certificate public key and the binding encryption information to the client.

Step 403: The client sends the user certificate public key and the binding encryption information to the security server.

Step 404: The security server decrypts the binding encryption information based on the user certificate public key to obtain binding decryption information.

The binding decryption information includes the target service information, the target device information, and the user account information.

Step 405: The security server verifies the binding decryption information.

In an implementation, the security server performs device authentication based on the target device information, and establishes an association relationship among the target service information, the user account information, and the target device information if the device authentication succeeds, to obtain a service binding relationship among the service, the user equipment, and the user account; or returns a binding failure result to the client if the device authentication fails or the decryption fails .

Further, the security server may return a binding success result including the service binding relationship to the client. If the client receives the binding failure result, a user binding procedure, to be specific, step 400 to step 405, is repeatedly performed until service binding succeeds.

Further, the user certificate may be logged out based on an unbinding operation of the user, and the service binding relationship may be deleted through an unbinding interface, to remove a trusted binding relationship.

It should be noted that, in this embodiment of this application, the security SDK provides a key generation interface in a trusted execution environment (TEE), so that the key generation interface can be invoked, and a digital certificate, that is, the device certificate and the user certificate, is generated according to a non-public rule. In this way, an invariable key pair is obtained, and a public key in the key pair is uploaded to a payment authentication platform, so that transmitted data can be encrypted and decrypted by using the key, to ensure security and authenticity of the transmitted data. Moreover, to further improve security, repeated instructions for generating a digital certificate are not processed, and a security level of the digital certificate may be set to a high level. In addition, the key pair may be set to global default, or the key pair may be set in one-to-one correspondence with a device.

In this embodiment of this application, only one service is used as an example for description. In an actual application, service binding relationships may be established for a plurality of different services. Details are not described herein.

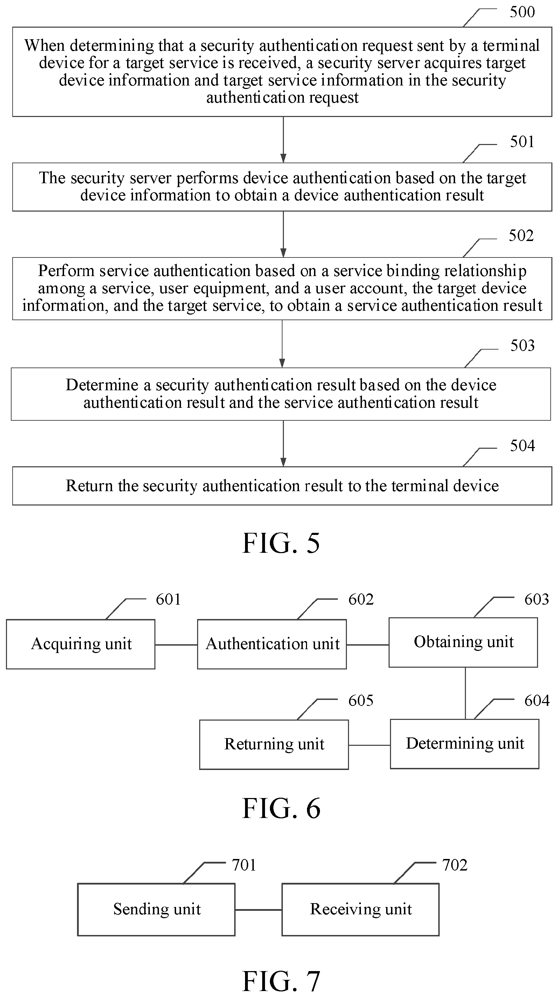

After the service binding relationship is established, security authentication can be performed. FIG. 5 is a flowchart of a security authentication method according to some implementations of this application. The following describes the method with reference to FIG. 5. A specific implementation procedure of the method is as follows.

Step 500: When determining that a security authentication request sent by a terminal device for a target service is received, the security server acquires target device information and target service information in the security authentication request.

In an implementation, when determining that a security authentication condition is satisfied, user equipment sends the security authentication request to the security server.

Optionally, the security authentication condition may be that a service request operation of a user for the target service is received, or may be that a service request instruction for the target service is received.

Optionally, the target service may be a service, for example, viewing information, downloading a file, invoking a service interface, or payment.

Further, to improve security, the user equipment may further sign the security authentication request, and send a signed security authentication request to the security server.

Step 501: The security server performs device authentication based on the target device information to obtain a device authentication result.

In an implementation, a device authentication status corresponding to the target device information is acquired. It is determined that the device authentication succeeds if the device authentication status indicates an authentication success; or it is determined that the device authentication fails if the device authentication status indicates an authentication failure.

In this way, a preset device authentication status can be acquired, and determining efficiency of the device authentication is improved.

Step 502: Perform service authentication based on a service binding relationship among a service, the user equipment, and a user account, the target device information, and the target service, to obtain a service authentication result.

Specifically, step 502 may be performed in any one of the following manners.

Manner 1: When the security authentication request does not include user account information, if user account information corresponding to the target device information and the target service information is successfully obtained based on the service binding relationship, it is determined that the service authentication succeeds; or if the user account information corresponding to the target device information and the target service information fails to be obtained based on the service binding relationship, it is determined that the service authentication fails.

In this way, whether the service authentication succeeds can be determined depending on whether the user account information corresponding to the target device information exists.

Manner 2: User account information corresponding to the target device information and the target service information is obtained based on the service binding relationship. If the user account information corresponding to the target device information and the target service information matches user account information further included in the security authentication request, it is determined that the service authentication succeeds; or if the user account information corresponding to the target service information and the target device information does not match the user account information further included in the security authentication request, it is determined that the service authentication fails.

In this way, whether the service authentication succeeds may be determined depending on whether the service binding relationship includes an association relationship between the user account information and the target device information.

Step 503: Determine a security authentication result based on the device authentication result and the service authentication result.

In an implementation, it is determined that the security authentication succeeds if the device authentication result indicates an authentication success, and the service authentication result indicates authentication success; or it is determined that the security authentication fails if any of the two conditions are not satisfied.

Further, when signature verification further needs to be performed on the security authentication request, it is determined that the security authentication succeeds if it is determined that the signature verification on the security authentication request succeeds, the device authentication result indicates an authentication success, and the service authentication result indicates authentication success; or it is determined that the security authentication fails if any of the three conditions are not satisfied.

In this way, the security authentication can be implemented.

Step 504: Return the security authentication result to the terminal device.

In this embodiment of this application, instead of performing security authentication by using a conventional biological feature or an account, device authentication is performed based on the target device information to ensure security of a device, and service authentication is performed based on the service binding relationship among the service, the user equipment, and the user account, the target service information, and the target device information, so that security of various services used by different users using different devices can be verified, and a security authentication requirement in a specific device scenario is satisfied. Further, whether the device authentication succeeds is determined based on a directly acquired device authentication status, so that efficiency of the device authentication is improved. In addition, whether service authenticction succeeds may be determined depending on whether the user account information corresponding to the target device information and the target service information is successfully acquired, or may be determined depending on whether the binding relationship among the target device information, the target service information, and the user account information is registered in advance, which increases diversity of the service authenticction. Moreover, the security authentication result is determined based on a signature verification result, the device authentication result, and the service authenticction result, so that accuracy of the security authentication is further improved, and security is improved.

User information (including but not limited to user equipment information, user personal information, and the like) and data (including but not limited to data used for analysis, stored data, displayed data, and the like) involved in this application are information and data authorized by a user or fully authorized by all parties. Collection, use, and processing of relevant data need to comply with the relevant laws, regulations, and standards of the relevant countries and regions. In addition, corresponding operation interfaces are provided for the user to grant or decline authorization.

Based on a same inventive concept, an implementation of this application further provides a security authentication apparatus. A problem-resolving principle of the apparatus and device is similar to the security authentication method. Therefore, for implementation of the apparatus, refer to the implementation of the method. Repeated descriptions are not described again. The apparatus may be used in an electronic device. A type of the electronic device is not limited in this application, and the electronic device may be any device type suitable for implementation, for example, a smartphone or a tablet computer. Details are not described in this application.

FIG. 6 is a structural block diagram of a security authentication apparatus according to an implementation of this application. In some implementations, the example security authentication apparatus in this application includes: an acquiring unit 601, configured to: when determining that a security authentication request sent by user equipment for a target service is received, acquire target device information and target service information in the security authentication request; an authentication unit 602, configured to perform device authentication based on the target device information to obtain a device authentication result; an obtaining unit 603, configured to perform service authentication based on a service binding relationship among a service, the user equipment, and a user account, the target device information, and the target service information, to obtain a service authentication result; a determining unit 604, configured to determine a security authentication result based on the device authentication result and the service authentication result; and a returning unit 605, configured to return the security authentication result to the user equipment.

In an implementation, the authentication unit 602 is further configured to: acquire a device authentication status corresponding to the target device information; and determine that the device authentication succeeds if the device authentication status indicates an authentication success; or determine that the device authentication fails if the device authentication status indicates an authentication failure.

In an implementation, the authentication unit 602 is further configured to: when determining that an online state sent by the user equipment is received, return a challenge code to the user equipment; when receiving device signature information of the user equipment, perform signature verification on the device signature information, where the device signature information is obtained by signing the target device information and the challenge code; and set the device authentication status to an authentication success if it is determined that the signature verification succeeds, the challenge code is the same as a local challenge code, and a device registration information set includes the target device information; or set the device authentication status to an authentication failure if any of the three conditions are not satisfied.

In an implementation, the obtaining unit 603 is configured to: when the security authentication request does not include user account information, determine that the service authentication succeeds if user account information corresponding to the target device information and the target service information is successfully obtained based on the service binding relationship; or determine that the service authentication fails if the user account information corresponding to the target device information and the target service information fails to be obtained based on the service binding relationship; or is configured to: obtain user account information corresponding to the target device information and the target service information based on the service binding relationship; and determine that the service authentication succeeds if the user account information corresponding to the target device information and the target service information matches user account information further included in the security authentication request; or determine that the service authentication fails if the user account information corresponding to the target device information and the target service information does not match the user account information further included in the security authentication request.

In an implementation, the obtaining unit 603 is further configured to: when determining that a user binding request is received, acquire a user binding signature in the user binding request; perform signature verification on the user binding signature; acquire user account information and target device information in the user binding signature if it is determined that the signature verification succeeds; perform device authentication based on the target device information to obtain a device authentication result; and establish a service binding relationship between the user account information and the target device information if the device authentication result indicates an authentication success.

In an implementation, the determining unit 604 is configured to: determine that the security authentication succeeds if the device authentication result indicates an authentication success, and the service authentication result indicates an authentication success; or determine that the security authentication fails if any of the two conditions are not satisfied.

In an implementation, the acquiring unit 601 is further configured to perform signature verification on the security authentication request. The determining unit 604 is configured to: determine that the security authentication succeeds if it is determined that the signature verification on the security authentication request succeeds, the device authentication result indicates an authentication success, and the service authentication result indicates an authentication success; or determine that the security authentication fails if any of the three conditions are not satisfied.

FIG. 7 is a structural block diagram of another security authentication apparatus according to implementations of this application. In some implementations, the example security authentication apparatus in this application includes: a sending unit 701, configured to send a security authentication request for a target service to a security server, where the security authentication request includes target device information and target service information; and a receiving unit 702, configured to receive a security authentication result returned by the security server, where the security authentication result is returned based on a device authentication result and a service authentication result, the device authentication result is obtained by performing device authentication based on the target device information, and the service authentication result is obtained by performing service authentication based on a service binding relationship among a service, user equipment, and a user account, the target device information, and the target service information.

In an implementation, the sending unit 701 is further configured to: when determining that a device authentication condition is satisfied, send an online state to a security server; when determining that a challenge code that is returned by the security server based on the online state is received, sign the target device information and the challenge code to obtain device signature information; send the device signature information to the security server; and receive a device authentication result that is returned by the security server based on the device signature information.

According to a security authentication method and apparatus, an electronic device, and a storage medium provided in embodiments of this application, when it is determined that a security authentication request sent by user equipment for a target service is received, target device information and target service information in the security authentication request are acquired; device authentication is performed based on the target device information to obtain a device authentication result; service authentication is performed based on a service binding relationship among a service, the user equipment, and a user account, the target device information, and the target service information, to obtain a service authentication result; a security authentication result is determined based on the device authentication result and the service authentication result; and the security authentication result is returned to the user equipment. In this way, the device authentication is first performed based on the target device information, and then the service authentication is performed based on the target device information and the target service information. Restrictions of different services for a device and a user are comprehensively considered, to improve performance of security authentication, and satisfy a requirement of the user for security authentication.

An implementation of this application provides an electronic device. The electronic device includes a processor and a memory, storing computer instructions. The computer instructions are for causing the processor to perform the method according to any one of the foregoing implementations.

An implementation of this application provides a storage medium, storing computer instructions. The computer instructions are for causing a computer to perform the method according to any one of the foregoing implementations.

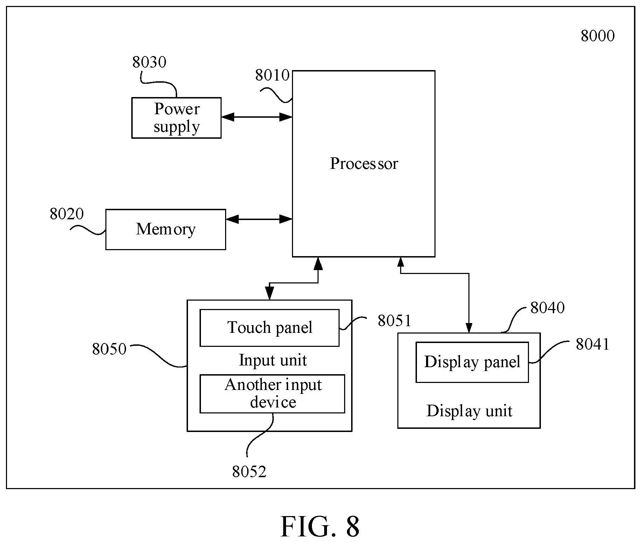

FIG. 8 is a schematic structural diagram of an electronic device 8000. Refer to FIG. 8. The electronic device 8000 includes a processor 8010 and a memory 8020, and optionally, may further include a power supply 8030, a display unit 8040, and an input unit 8050.

The processor 8010 is a control center of the electronic device 8000, connects components through various interfaces and lines, and performs various functions of the electronic device 8000 by running or executing a software program and/or data stored in the memory 8020.

In this embodiment of this application, when invoking a computer program stored in the memory 8020, the processor 8010 performs the steps in the foregoing embodiments.

Optionally, the processor 8010 may include one or more processing units. Preferably, the processor 8010 may integrate an application processor and a modem processor. The application processor mainly processes an operating system, a user interface, an application, and the like. The modem processor mainly processes wireless communication. It may be understood that the modem processor may alternatively not be integrated into the processor 8010. In some embodiments, the processor and the memory may be implemented on a single chip. In some embodiments, the processor and the memory may be separately implemented on independent chips.

The memory 8020 may mainly include a program storage region and a data storage region. The program storage region may store an operating system, various applications, and the like. The data storage region may store data created according to use of the electronic device 8000, and the like. In addition, the memory 8020 may include a high-speed random access memory, and may further include a non-volatile memory, for example, at least one magnetic disk storage device, a flash memory device, or another volatile solid-state storage device.

The electronic device 8000 further includes the power supply 8030 (for example, a battery) for supplying power to the components. The power supply may logically connect to the processor 8010 by using a power supply management system, to implement functions, such as charging, discharging, and power consumption management, by using the power supply management system.

The display unit 8040 may be configured to display information entered by a user or information provided for a user, various menus of the electronic device 8000, and the like. In this embodiment of this application, the display unit 8040 is mainly configured to display display interfaces of applications in the electronic device 8000 and objects, such as texts and pictures, displayed on the display interfaces. The display unit 8040 may include a display panel 8041. The display panel 8041 may be configured in a form of a liquid crystal panel (LCD), an organic light-emitting diode (OLED), and the like.

The input unit 8050 may be configured to receive information such as a digit or a character entered by a user. The input unit 8050 may include a touch panel 8051 and another input device 8052. The touch panel 8051, also referred to as a touchscreen, may collect a touch operation of a user on or near the touch panel (for example, an operation of a user on or near the touch panel 8051 by using any suitable item or accessory such as a finger or a stylus pen).

Specifically, the touch panel 8051 may detect a touch operation of the user, detect signals generated by the touch operation, convert the signals into touch point coordinates, send the touch point coordinates to the processor 8010, and receive and execute a command sent by the processor 8010. In addition, the touch panel 8051 may be implemented by using various types, such as a resistive type, a capacitance type, an infrared type, and a surface sound wave type. The another input device 8052 may include, but is not limited to, one or more of a physical keyboard, a functional key (for example, a sound volume control key or a switch key), a track ball, a mouse, a joystick, and the like.

Certainly, the touch panel 8051 may cover the display panel 8041. After detecting a touch operation on or near the touch panel 8051, the touch panel 8051 transfers the touch operation to the processor 8010, to determine a type of a touch event. Then, the processor 8010 provides corresponding visual output on the display panel 8041 based on the type of the touch event. Although, in FIG. 8, the touch panel 8051 and the display panel 8041 are used as two separate components to implement input and output functions of the electronic device 8000, in some embodiments, the touch panel 8051 and the display panel 8041 may be integrated to implement the input and output functions of the electronic device 8000.

The electronic device 8000 may further include one or more sensors, for example, a pressure sensor, a gravity acceleration sensor, and a proximity optical sensor. Certainly, based on a requirement in a specific application, the foregoing electronic device 8000 may further include another component such as a camera. Because these components are not components mainly used in this embodiment of this application, the components are not shown in FIG. 8 and are not described in detail.

A person skilled in the art may understand that the electronic device shown in FIG. 8 is merely an example, and does not constitute a limitation to the electronic device, and the electronic device may include more components or fewer components than those shown in the figure, or some components may be combined, or a different component deployment may be used.

For ease of description, the foregoing components are divided into modules (or units) based on functions and are described separately. Certainly, when this application is implemented, the functions of the modules (or units) may be implemented in the same piece of or a plurality of pieces of software or hardware.

Apparently, the foregoing implementations are merely examples for clear description, but are not intended to limit the implementations. For a person of ordinary skill in the art, changes or variations in other different forms may be made based on the foregoing descriptions. It is neither necessary nor possible to exhaustively list all possible implementations. However, apparent changes or variations introduced herein shall fall within the protection scope of this application.

## Claims

1. A security authentication method, wherein the method comprises:
when determining that a security authentication request sent by user equipment for a target service is received, acquiring target device information and target service information in the security authentication request;
performing device authentication based on the target device information to obtain a device authentication result;
performing service authentication based on a service binding relationship among a service, the user equipment, and a user account, the target device information, and the target service information, to obtain a service authentication result;
determining a security authentication result based on the device authentication result and the service authentication result; and
returning the security authentication result to the user equipment.

2. The method according to claim 1, wherein the performing device authentication based on the target device information to obtain a device authentication result comprises:
acquiring a device authentication status corresponding to the target device information;
and
determining that the device authentication succeeds if the device authentication status indicates an authentication success, or determining that the device authentication fails if the device authentication status indicates an authentication failure.

3. The method according to claim 2, wherein before the acquiring a device authentication status corresponding to the target device information, the method further comprises:
when determining that an online state sent by the user equipment is received, returning a challenge code to the user equipment;
when receiving device signature information of the user equipment, performing signature verification on the device signature information, wherein the device signature information is obtained by signing the target device information and the challenge code; and
setting the device authentication status to an authentication success if it is determined that the signature verification succeeds, the challenge code is the same as a local challenge code, and a device registration information set comprises the target device information; or setting the device authentication status to an authentication failure if any of the three conditions are not satisfied.

4. The method according to any one of claims 1 to 3, wherein the performing service authentication based on a service binding relationship among a service, the user equipment, and a user account, the target device information, and the target service information, to obtain a service authentication result comprises:
when the security authentication request does not comprise user account information, determining that the service authentication succeeds if user account information corresponding to the target device information and the target service information is successfully obtained based on the service binding relationship; or determining that the service authentication fails if the user account information corresponding to the target device information and the target service information fails to be obtained based on the service binding relationship; or
obtaining user account information corresponding to the target device information and the target service information based on the service binding relationship; and determining that the service authentication succeeds if the user account information corresponding to the target device information and the target service information matches user account information further comprised in the security authentication request; or determining that the service authentication fails if the user account information corresponding to the target device information and the target service information does not match the user account information further comprised in the security authentication request.

5. The method according to any one of claims 1 to 3, wherein before the performing service authentication based on a service binding relationship among a service, the user equipment, and a user account, the target device information, and the target service information, to obtain a service authentication result, the method further comprises:
when determining that a user binding request is received, acquiring a user binding signature in the user binding request;
performing signature verification on the user binding signature;
acquiring user account information and target device information in the user binding signature if it is determined that the signature verification succeeds;
performing device authentication based on the target device information to obtain a device authentication result; and
establishing a service binding relationship between the user account information and the target device information if the device authentication result indicates an authentication success.

6. The method according to any one of claims 1 to 3, wherein the determining a security authentication result based on the device authentication result and the service authentication result comprises:
determining that security authentication succeeds if the device authentication result indicates an authentication success, and the service authentication result indicates an authentication success; or determining that security authentication fails if any of the two conditions are not satisfied.

7. The method according to any one of claims 1 to 3, wherein before the acquiring target device information and target service information in the security authentication request, the method further comprises:
performing signature verification on the security authentication request; and
the determining a security authentication result based on the device authentication result and the service authentication result comprises:
determining that security authentication succeeds if it is determined that the signature verification on the security authentication request succeeds, the device authentication result indicates an authentication success, and the service authentication result indicates an authentication success; or determining that the security authentication fails if any of the three conditions are not satisfied.

8. A security authentication method, wherein the method comprises:
sending a security authentication request for a target service to a security server, wherein the security authentication request comprises target device information and target service information; and
receiving a security authentication result returned by the security server, wherein the security authentication result is returned based on a device authentication result and a service authentication result, the device authentication result is obtained by performing device authentication based on the target device information, and the service authentication result is obtained by performing service authentication based on a service binding relationship among a service, user equipment, and a user account, the target device information, and the target service information.

9. The method according to claim 8, wherein before the receiving a security authentication result returned by the security server, the method further comprises:
when determining that a device authentication condition is satisfied, sending an online state to the security server;
when determining that a challenge code that is returned by the security server based on the online state is received, signing the target device information and the challenge code, to obtain device signature information;
sending the device signature information to the security server; and
receiving a device authentication result that is returned by the security server based on the device signature information.

10. A security authentication apparatus, wherein the apparatus comprises:
an acquiring unit, configured to: when determining that a security authentication request sent by user equipment for a target service is received, acquire target device information and target service information in the security authentication request;
an authentication unit, configured to perform device authentication based on the target device information to obtain a device authentication result;
an obtaining unit, configured to perform service authentication based on a service binding relationship among a service, the user equipment, and a user account, the target device information, and the target service information, to obtain a service authentication result;
a determining unit, configured to determine a security authentication result based on the device authentication result and the service authentication result; and
a returning unit, configured to return the security authentication result to the user equipment.

11. A security authentication apparatus, wherein the apparatus comprises:
a sending unit, configured to send a security authentication request for a target service to a security server, wherein the security authentication request comprises target device information and target service information; and
a receiving unit, configured to receive a security authentication result returned by the security server, wherein the security authentication result is returned based on a device authentication result and a service authentication result, the device authentication result is obtained by performing device authentication based on the target device information, and the service authentication result is obtained by performing service authentication based on a service binding relationship among a service, user equipment, and a user account, the target device information, and the target service information.

12. An electronic device, comprising:
a processor; and
a memory, storing computer instructions, wherein the computer instructions are for causing the processor to perform the method according to any one of claims 1 to 7 or 8 and 9.

13. A storage medium, storing computer instructions, wherein the computer instructions are for causing a computer to perform the method according to any one of claims 1 to 7 or 8 and 9.
